# FASCICULE DE BREVET EUROPEEN

(11) **EP 3 861 229 B1**
(45) Date de publication et mention de la délivrance du brevet: **24.08.2022**
(21) Numéro de dépôt: 19787038.9
(22) Date de dépôt: 12.09.2019
(51) Int. Cl.: F16F 9/49, F16F 9/56

(54) **AMORTISSEUR HYDRAULIQUE AVEC BUTÉE HYDRAULIQUE DE FIN DE COURSE A HAUTEUR AUTO-AJUSTABLE**
HYDRAULISCHER STOSSDÄMPFER MIT HYDRAULISCHER ENDANSCHLAGSBEGRENZUNG AN EINER SELBST EINSTELLBAREN HÖHE
HYDRAULIC SHOCK ABSORBER WITH END-OF-TRAVEL HYDRAULIC STOP AT SELF-ADJUSTABLE HEIGHT

(30) Priorité: 04.10.2018 FR 1859222
(43) Date de publication de la demande: 11.08.2021
(73) Titulaire: PSA Automobiles SA, 78300 Poissy (FR)
(72) Inventeur: MONTEIL, Christophe, 91640 BRIIS SOUS FORGES (FR)
(86) Numéro de dépôt international: PCT/FR2019/052121
(87) Numéro de publication internationale: WO 2020/070399

(56) Documents cités:
- DE-C1- 10 222 940
- FR-A1- 3 050 000
- US-A- 2 565 617
- US-A1- 2016 097 406

## Description

La présente invention concerne un amortisseur hydraulique de suspension de véhicule automobile, ainsi qu'un véhicule comportant des suspensions équipées de ce type d'amortisseur.

Les véhicules automobiles comportent pour chaque roue une suspension comprenant un ressort de suspension, et un amortisseur télescopique hydraulique qui freine les mouvements de la suspension. En particulier l'amortisseur peut comporter une butée hydraulique de fin de course de compression, qui arrête progressivement le mouvement de compression de la suspension pour éviter un choc en fin de la course. Un tel amortisseur est par exemple décrit dans le document DE10222940.

Un type d'amortisseur connu comportant une butée hydraulique de fin de course à freinage ajustable, présenté notamment par le document FR-A1-3050000, comporte une tige présentant une extrémité supérieure fixée à la caisse du véhicule, son extrémité inférieure recevant un piston coulissant dans un corps cylindrique formant un tube d'amortisseur afin de séparer deux chambres, en réalisant un amortissement du mouvement de la suspension par un transfert du fluide d'une chambre à l'autre.

Une butée hydraulique de fin de course de compression, disposée en bas du corps cylindrique pour arrêter la course du piston à la fin de sa descente, comporte une chambre de butée comprenant des perçages additionnels réalisant le freinage de fin de course, équipée d'un boisseau intérieur qui coulisse dans cette chambre en fermant progressivement les perçages additionnels.

Un mode de réalisation de ce type d'amortisseur comporte un ressort reliant le piston d'amortisseur au boisseau. Lors des mouvements de suspension, les oscillations rapides du piston autour d'une position moyenne donnent des efforts alternés sur le boisseau qui se déplace peu à cause d'un freinage hydraulique de ce boisseau formant une temporisation.

Par contre un écart de la position moyenne du piston d'amortisseur donné par une charge différente du véhicule modifiant son assiette, applique dans un sens un effort sur le boisseau qui finit par se décaler à l'encontre de son freinage hydraulique, en réalisant une auto-adaptation de la force de freinage de la butée de fin de course. De cette manière on augmente la force de freinage de la butée de fin de course pour un véhicule plus chargé.

Toutefois pour un véhicule roulant avec une faible charge donnant une assiette haute, la course de la suspension disponible avant d'atteindre la butée de fin de course de compression est élevée, ce qui lui permet de prendre une vitesse importante avant d'arriver sur cette butée. On obtient alors une arrivée sur la butée avec une vitesse importante générant aussi un inconfort.

La présente invention a notamment pour but d'éviter ces inconvénients de la technique antérieure.

Elle propose à cet effet un amortisseur hydraulique comportant un corps cylindrique, un piston d'amortisseur fixé à l'extrémité d'une tige, coulissant axialement dans ce corps, et une butée hydraulique de freinage de fin de course disposée entre le piston d'amortisseur et un fond du corps, cet amortisseur étant remarquable en ce que la butée de fin de course comporte un piston de butée délimitant une chambre de réglage entre cette butée de fin de course et le fond de corps, équipé d'un clapet laissant un passage libre pour un remplissage de cette chambre de réglage, et d'un canal de restriction pour sa vidange, comporte un dispositif d'écartement axial maximum entre la butée de fin de course et le piston d'amortisseur, et comporte un ressort d'écartement qui tend à augmenter cet écartement.

Un avantage de cet amortisseur hydraulique est que le véhicule étant au repos, le ressort d'écartement applique une force qui tend à descendre la butée jusqu'à son écartement maximum, le fluide pouvant passer lentement par le canal de restriction en laissant le volume de la chambre de réglage s'ajuster pour obtenir cette distance maximum.

Pendant le roulage du véhicule les oscillations de la suspension autour de sa position moyenne constante correspondant à l'assiette du véhicule, présente une fréquence d'oscillation proche d'un Hertz constituant une dynamique rapide.

Pour un véhicule à vide, au début du roulage lors de la première détente avec une montée du piston d'amortisseur, le dispositif d'écartement maximum remonte la butée à une position moyenne à vide, la chambre de réglage se remplissant rapidement grâce au clapet qui est ouvert dans ce sens.

Lors de la compression suivante le ressort d'écartement transmet à la butée une force vers le bas, la chambre de réglage tend à se vider, mais le clapet étant fermé le canal de restriction donne une temporisation au transfert du fluide qui ne laisse pas cette chambre se vider rapidement. La butée de fin de course descend très peu avec une dynamique lente. La compression de l'amortisseur présente une course nominale sensiblement constante avant d'atteindre cette butée.

Lors d'une charge du véhicule à l'arrêt le piston d'amortisseur avec le dispositif de limitation d'écartement descend, la butée de fin de course descend progressivement en suivant ce dispositif grâce au passage lent du fluide dans le canal de restriction.

A nouveau au début du roulage lors de la première détente le dispositif d'écartement maximum remonte la butée à une position moyenne en charge, la chambre de réglage se remplissant rapidement. Puis lors de la compression suivante le ressort d'écartement transmet à la butée une force vers le bas, en vidant très peu la chambre de réglage à cause du passage dans le canal de restriction.

Comme pour le roulage à vide, la position moyenne en charge de la butée de fin de course change très peu, et la compression de l'amortisseur présente une même course nominale avant d'atteindre cette butée. On obtient un amortisseur comprenant à vide comme en charge toujours la même course de compression avant d'atteindre la butée de fin de course, ce qui permet d'optimiser le confort du véhicule.

L'amortisseur hydraulique selon l'invention peut de plus comporter une ou plusieurs des caractéristiques suivantes, qui peuvent être combinées entre elles.

Avantageusement, le dispositif d'écartement maximum comporte un axe central reliant le piston d'amortisseur à la butée de fin de course.

Dans ce cas, en particulier l'axe central peut coulisser dans le piston d'amortisseur ou dans la butée de fin de course.

De plus, selon un mode de réalisation, l'axe central est fixé par une extrémité à la butée de fin de course, et comporte à l'autre extrémité un arrêt venant axialement après un ajustement dans un perçage de guidage du piston d'amortisseur.

Avantageusement l'amortisseur comporte un ressort d'écartement hélicoïdal de compression, prenant appui d'un côté sur la butée de fin de course et de l'autre côté sur le piston d'amortisseur.

Avantageusement, le ressort d'écartement hélicoïdal entoure l'axe central.

Avantageusement, la butée de fin de course comporte une chambre de butée cylindrique recevant autour un plongeur cylindrique fixé au piston d'amortisseur.

Dans ce cas, avantageusement la chambre de butée comporte une série de perçages répartis axialement.

L'invention a aussi pour objet un véhicule automobile équipé de suspensions, remarquable en ce que ces suspensions comportent des amortisseurs hydrauliques comprenant l'une quelconque des caractéristiques précédentes.

Avantageusement, pour chaque amortisseur la chambre de réglage présente une longueur axiale donnant avec une assiette correspondant à la charge maximum admissible du véhicule, lors du roulage, la course nominale totale entre la position moyenne du piston d'amortisseur et la butée de fin de course.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue en coupe axiale d'un amortisseur selon l'invention pour un véhicule au repos qui est fortement chargé ;
- les figures 2 et 3 sont des vues en coupe axiale d'un piston de la butée de fin de course de cet amortisseur, présenté successivement lors d'une descente et lors d'une montée de ce piston ; et
- les figures 4, 5 et 6 sont des vues de cet amortisseur pour un véhicule à vide, présenté successivement avec le véhicule au repos, lors d'un roulage avec la position moyenne de l'amortisseur, et avec sa position de fin de course de compression.

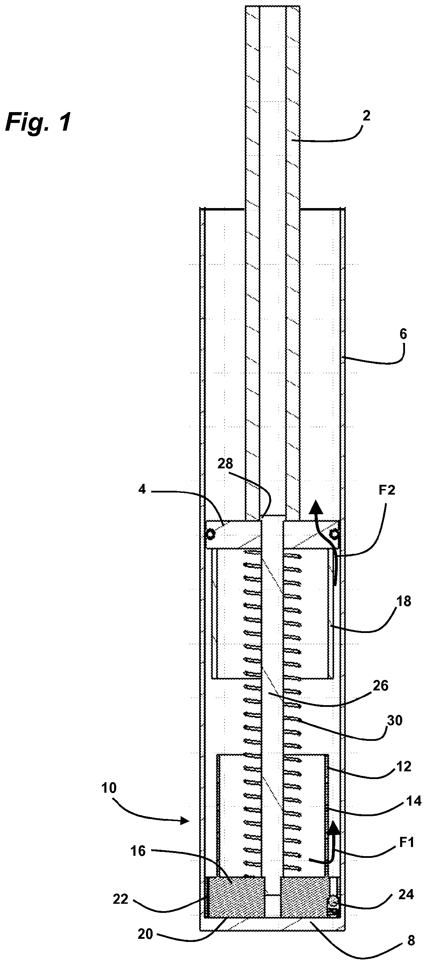

La figure 1 présente un amortisseur hydraulique comprenant un corps axial cylindrique 6 fixé à un élément de suspension du véhicule, contenant un piston d'amortisseur 4 fixé à la base d'une tige 2 dont l'extrémité supérieure est liée à la caisse du véhicule, afin d'amortir les mouvements entre la suspension et cette caisse. Le piston d'amortisseur 4 comporte des perçages de freinage du passage du fluide entre les deux chambres séparées par ce piston, présentant un freinage différencié suivant le sens de passage.

Une butée hydraulique de fin de course 10 comporte à sa base un piston 16 coulissant avec une étanchéité dans le corps 6, recevant au-dessus une chambre de butée cylindrique 12 présentant une série de perçages 14 répartis axialement.

L'amortisseur comporte entre le piston de butée 16 et le fond inférieur du corps 8, une chambre hydraulique de réglage 20 qui dans cette figure présente un volume quasiment nul, la butée de fin de course 10 étant dans sa position la plus basse près de ce fond de corps.

Un plongeur cylindrique 18 fixé sous le piston d'amortisseur 4, vient en fin de course de compression s'ajuster autour de la chambre de butée 12 en fermant progressivement les perçages 14 de cette chambre.

On obtient quand la butée de fin de course 10 agit, une fermeture de la chambre de butée 12 par le plongeur 18 venant fermer son ouverture supérieure, puis une vidange progressive de cette chambre par les perçages 14 suivant la flèche F1, qui est de plus en plus freinée suivant la descente de ce plongeur. Le fluide passe ensuite au travers du piston d'amortisseur 4 suivant la flèche F2. On forme un freinage progressif et sans choc jusqu'à l'arrêt complet de la tige 2.

Un axe central 26 disposé suivant l'axe principal de l'amortisseur, présente une extrémité inférieure fixée rigidement dans un perçage du piston de butée 16, et une extrémité supérieure coulissant dans un perçage du piston d'amortisseur 4, comprenant un rebord supérieur 28 formant un arrêt venant au-dessus de ce piston.

Le rebord supérieur 28 peut monter librement au-dessus du piston d'amortisseur 4 en coulissant dans un perçage axial de la tige 2, en suivant dans ce mouvement la butée de fin de course 10. Dans sa position basse le rebord supérieur 28 en appui sur le dessus du piston d'amortisseur 4, forme un dispositif d'écartement axial maximum entre la butée de fin de course 10 et ce piston d'amortisseur, limitant la distance maximum.

Un ressort hélicoïdal d'écartement 30 disposé autour de l'axe central 26, prend appui d'un côté au-dessus du piston de butée 16 et de l'autre côté en dessous du piston d'amortisseur 4 pour tendre à augmenter l'écartement entre ces deux éléments.

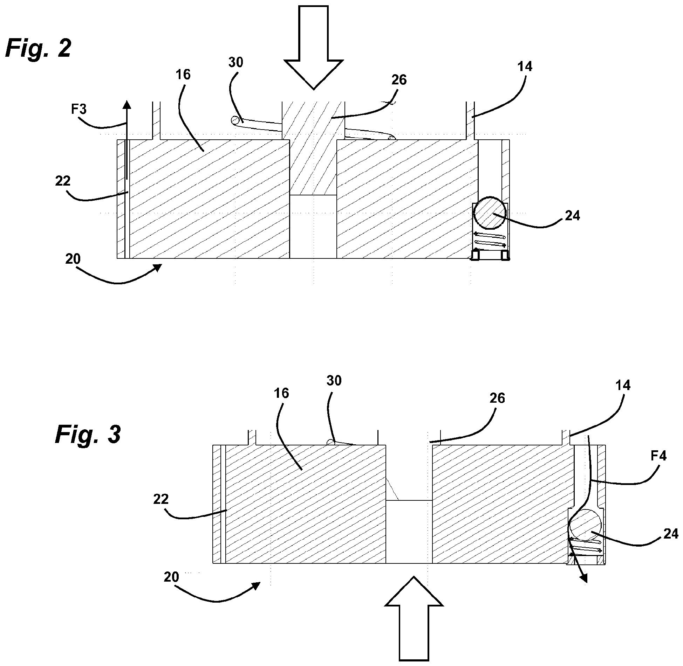

Les figures 2 et 3 présentent la base de la butée de fin de course, formant le piston 16 coulissant dans le corps 6 avec une étanchéité dynamique non représentée sur les figures.

Un premier passage de fluide entre la chambre inférieure de l'amortisseur disposée au-dessus du piston de butée 16 et la chambre de réglage 20 disposée en dessous, forme un canal de restriction 22 permettant un passage du fluide dans les deux sens suivant la flèche F3, avec une dynamique lente.

Un deuxième passage de fluide comporte un clapet 24 comprenant une bille et un ressort plaquant cette vis sur un siège, fermant le passage de vidange de la chambre de réglage 20 quand le piston de butée 16 descend comme présenté figure 2, et ouvrant librement le passage de remplissage de cette chambre suivant la flèche F4 quand ce piston remonte, comme présenté figure 3.

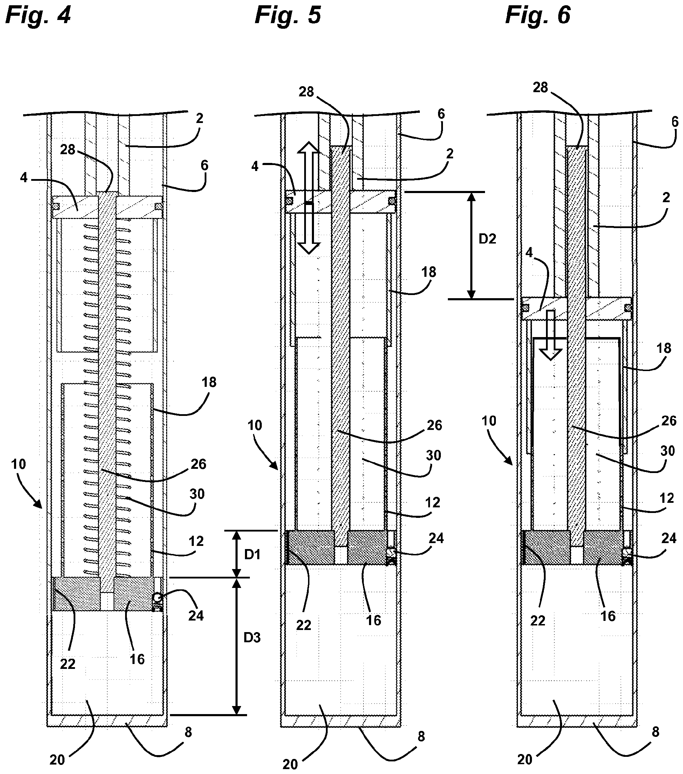

La figure 4 présente sur un véhicule au repos, peu chargé avec une assiette haute, le ressort d'écartement 30 appliquant une force qui tend à descendre la butée de fin de course 10.

Le fluide passant avec une dynamique lente par le canal de restriction 22, permet une vidange de la chambre de réglage 20 mettant la butée de fin de course 10 dans sa position la plus basse, retenue par l'axe 26 mettant son rebord supérieur 28 en appui, en fixant l'écartement maximum entre cette butée et le piston d'amortisseur 4.

La figure 5 présente la position moyenne du piston d'amortisseur 4, après des oscillations de la suspension avec une dynamique suffisamment rapide. Au début du roulage lors de la première montée du piston d'amortisseur 4, l'axe 26 a remonté la butée 10 d'une hauteur D1, la chambre de réglage 20 se remplissant librement par le clapet 24 ouvert.

Dans la position basse du piston d'amortisseur 4, le ressort d'écartement 30 applique une force calibrée sur la butée de fin de course 10, mais la dynamique lente imposée par le canal de restriction 22 ne permet qu'une très faible vidange de la chambre de réglage 20. La butée de fin de course 10 reste à une distance sensiblement constante de la position moyenne du piston d'amortisseur 4.

La figure 6 présente un choc important sur la suspension, donnant une course nominale totale D2 de l'amortisseur à partir de sa position moyenne, en venant en fin de course sur la butée 10 qui prend appui sur la chambre de réglage 20 ne pouvant se vider avec une dynamique rapide.

De manière similaire pour un véhicule au repos fortement chargé avec une assiette basse, le ressort d'écartement 30 applique une force sur la butée de fin de course 10 qui provoque une vidange de la chambre de réglage 20 avec une dynamique lente, mettant cette butée dans une position basse qui atteint le fond de corps 8, comme présenté figure 1. Le piston d'amortisseur 4 est descendu d'une valeur correspondant à la descente D3 présentée figure 4.

La chambre de réglage 20 présente une longueur axiale permettant avec une assiette correspondant à la charge maximum admissible du véhicule, une descente suffisante de la butée de fin de course 10 donnant lors du roulage la course nominale complète D2 entre la position moyenne du piston d'amortisseur 4 et la butée de fin de course 10.

On a ensuite lors du roulage un fonctionnement similaire à celui du véhicule peu chargé, avec un décalage de toutes les positions vers le bas suivant la descente D3.

En particulier la butée de fin de course 10 reste à une même hauteur sensiblement constante de la position moyenne du piston d'amortisseur 4, donnant à l'amortisseur venant en fin de course sur cette butée lors d'un choc important une course nominale totale identique D2.

On obtient dans tous les cas de charge du véhicule, une course constante de compression de l'amortisseur à partir de sa position moyenne jusqu'à la butée de fin de course, qui assure le confort.

On notera que l'amortisseur télescopique selon l'invention peut être disposé dans le véhicule automobile suivant toutes les directions, le corps d'amortisseur 6 pouvant être fixé à un élément de suspension ou à la caisse du véhicule.

## Revendications

1. - Amortisseur hydraulique comportant un corps cylindrique (6), un piston d'amortisseur (4) fixé à l'extrémité d'une tige (2), coulissant axialement dans ce corps (6), et une butée hydraulique de freinage de fin de course (10) disposée entre le piston d'amortisseur (4) et un fond du corps (8), la butée de fin de course (10) comporte un piston de butée (16) délimitant une chambre de réglage (20) entre cette butée de fin de course (10) et le fond de corps (8), équipé d'un clapet (24) laissant un passage libre pour un remplissage de cette chambre de réglage (20), et d'un canal de restriction (22) pour sa vidange, **caractérisé en ce que** l'amortisseur comporte un dispositif d'écartement axial maximum (26) entre la butée de fin de course (10) et le piston d'amortisseur (4), et comporte un ressort d'écartement (30) qui tend à augmenter cet écartement.

2. - Amortisseur hydraulique selon la revendication 1, **caractérisé en ce que** le dispositif d'écartement maximum (26) comporte un axe central reliant le piston d'amortisseur (4) à la butée de fin de course (10).

3. - Amortisseur hydraulique selon la revendication 2, **caractérisé en ce que** l'axe central coulisse dans le piston d'amortisseur (4) ou dans la butée de fin de course (10).

4. - Amortisseur hydraulique selon la revendication 3, **caractérisé en ce que** l'axe central est fixé par une extrémité à la butée de fin de course (10), et comporte à l'autre extrémité un arrêt (28) venant axialement après un ajustement dans un perçage de guidage du piston d'amortisseur (4).

5. - Amortisseur hydraulique selon l'une quelconque des revendications précédentes, **caractérisé en ce qu'**il comporte un ressort d'écartement hélicoïdal de compression (30), prenant appui d'un côté sur la butée de fin de course (10) et de l'autre côté sur le piston d'amortisseur (4).

6. - Amortisseur hydraulique selon l'une quelconque des revendications 2 à 4, et selon la revendication 5, **caractérisé en ce que** le ressort d'écartement hélicoïdal (30) entoure l'axe central (26).

7. - Amortisseur hydraulique selon l'une quelconque des revendications précédentes, **caractérisé en ce que** la butée de fin de course (10) comporte une chambre de butée cylindrique (12) recevant autour un plongeur cylindrique (18) fixé au piston d'amortisseur (4).

8. - Amortisseur hydraulique selon la revendication 7, **caractérisé en ce que** la chambre de butée (12) comporte une série de perçages (14) répartis axialement.

9. - Véhicule automobile équipé de suspensions, **caractérisé en ce que** ces suspensions comportent des amortisseurs hydrauliques selon l'une quelconque des revendications précédentes.

10. - Véhicule automobile selon la revendication 9, **caractérisé en ce que** pour chaque amortisseur la chambre de réglage (20) présente une longueur axiale donnant avec une assiette correspondant à la charge maximum admissible du véhicule, lors du roulage, la course nominale totale (D2) entre la position moyenne du piston d'amortisseur (4) et la butée de fin de course (10).

## Patentansprüche

1. Hydraulischer Stoßdämpfer mit einem zylindrischen Körper (6), einem am Ende einer Stange (2) befestigten, in diesem Körper (6) axial verschiebbaren Stoßdämpferkolben (4) und einem zwischen dem Stoßdämpferkolben (4) und einem Boden des Körpers (8) angeordneten hydraulischen Endanschlag (10), wobei der Endanschlag (10) einen Anschlagkolben (16) aufweist, der einen Stellraum (20) zwischen diesem Endanschlag (10) und dem Gehäuseboden (8) begrenzt, der mit einer Klappe (24) versehen ist, die einen Hub hinterlässt Freier Durchgang für eine Befüllung dieses Stellraums (20) und eines Drosselkanals (22) zu dessen Entleerung, **dadurch gekennzeichnet, dass** der Dämpfer eine maximale axiale Spreizeinrichtung (26) zwischen dem Endanschlag (10) und dem Dämpferkolben (4) aufweist und eine Spreizfeder (30) aufweist, die dazu neigt, diesen Spreizbereich zu vergrößern.

2. Hydraulischer Stoßdämpfer nach Anspruch 1, **dadurch gekennzeichnet, dass** die maximale Spreizeinrichtung (26) eine den Stoßdämpferkolben (4) mit dem Endanschlag (10) verbindende Mittelachse aufweist.

3. Hydraulischer Stoßdämpfer nach Anspruch 2, **dadurch gekennzeichnet, dass** die Mittelachse im Stoßdämpferkolben (4) oder im Endanschlag (10) gleitet.

4. Hydraulischer Stoßdämpfer nach Anspruch 3, **dadurch gekennzeichnet, dass** die Mittelachse mit einem Ende am Endanschlag (10) befestigt ist und am anderen Ende einen Anschlag (28) aufweist, der nach einer Justierung in einer Führungsbohrung des Stoßdämpferkolbens (4) axial eingreift.

5. Hydraulischer Stoßdämpfer nach einem der vorhergehenden Ansprüche, **dadurch gekennzeichnet, dass** er eine Schraubendruckfeder (30) aufweist, die sich einerseits am Endanschlag (10) und andererseits am Dämpferkolben (4) abstützt.

6. Hydraulischer Stoßdämpfer nach einem der Ansprüche 2 bis 4 und nach Anspruch 5, **dadurch gekennzeichnet, dass** die Schraubendruckfeder (30) die Mittelachse (26) umgibt.

7. Hydraulischer Stoßdämpfer nach einem der vorhergehenden Ansprüche, **dadurch gekennzeichnet, dass** der Endanschlag (10) eine zylindrische Anschlagkammer (12) aufweist, die einen am Stoßdämpferkolben (4) befestigten zylindrischen Kolben (18) umgreift.

8. Hydraulischer Stoßdämpfer nach Anspruch 7, **dadurch gekennzeichnet, dass** die Anschlagkammer (12) eine Reihe von axial verteilten Bohrungen (14) aufweist.

9. Kraftfahrzeug mit Aufhängungen, **dadurch gekennzeichnet, dass** diese Aufhängungen hydraulische Dämpfer nach einem der vorhergehenden Ansprüche umfassen.

10. Kraftfahrzeug nach Anspruch 9, **dadurch gekennzeichnet, dass** der Stellraum (20) für jeden Stoßdämpfer eine axiale Länge aufweist, die mit einer der maximal zulässigen Fahrzeugbelastung entsprechenden Lage den gesamten Nennhub (D2) zwischen der Mittelstellung des Stoßdämpferkolbens (4) und dem Endanschlag (10) beim Rollen ergibt.

## Claims

1. Hydraulic damper comprising a cylindrical body (6), a damper piston (4) fixed to the end of a rod (2), sliding axially in this body (6), and a hydraulic end-of-stroke braking stop (10) arranged between the damper piston (4) and a bottom of the body (8), the end-of-stroke stop (10) comprises a stop piston (16) delimiting an adjustment chamber (20) between this end-of-stroke stop (10) and the bottom of the body (8), equipped with a valve (24) leaving a passage free for filling the adjusting chamber (20) and a restriction channel (22) for emptying it, **characterized in that** the damper has a device (26) for maximum axial spacing between the limit stop (10) and the damper piston (4) and has a spacing spring (30) which tends to increase this spacing.

2. Hydraulic damper according to Claim 1, **characterized in that** the maximum spacer (26) has a central axis connecting the damper piston (4) to the limit stop (10).

3. Hydraulic damper according to Claim 2, **characterized in that** the central axis slides in the damper piston (4) or in the limit stop (10).

4. Hydraulic damper according to Claim 3, **characterized in that** the central axis is fixed at one end to the limit stop (10) and has at the other end a stop (28) which comes axially after an adjustment in a guide bore of the damper piston (4).

5. Hydraulic damper according to one of the preceding claims, **characterized in that** it comprises a helical compression spring (30) which bears on one side against the limit stop (10) and on the other side against the damper piston (4).

6. Hydraulic damper according to one of Claims 2 to 4, and according to Claim 5, **characterized in that** the helical spacer spring (30) surrounds the central axis (26).

7. Hydraulic damper according to one of the preceding claims, **characterized in that** the limit stop (10) has a cylindrical stop chamber (12) which receives around a cylindrical plunger (18) fixed to the damper piston (4).

8. Hydraulic damper according to Claim 7, **characterized in that** the abutment chamber (12) has a series of axially distributed bores (14).

9. Motor vehicle equipped with suspensions, **characterized in that** these suspensions comprise hydraulic dampers according to any one of the preceding claims.

10. Motor vehicle according to claim 9, **characterized in that** for each damper the adjustment chamber (20) has an axial length which, with a trim corresponding to the maximum permissible load of the vehicle, during the running, gives the total nominal travel (D2) between the average position of the damper piston (4) and the limit stop (10).
